# EUROPEAN PATENT SPECIFICATION

(11) **EP 2 613 508 B1**
(45) Date of publication and mention of the grant of the patent: **23.09.2015**
(21) Application number: 12150407.0
(22) Date of filing: 06.01.2012
(51) Int. Cl.: H04M 1/725, H04M 3/42, H04M 1/57

(54) **Communications system providing caller identification features based upon near field communication and related methods**
Kommunikationssystem mit Anruferidentifizierungsfunktionen basierend auf Nahfeldkommunikation und zugehörige Verfahren
Système de communication fournissant des fonctions d'identification de l'appelant basé sur une communication de champ proche et procédés apparentés

(43) Date of publication of application: 10.07.2013
(73) Proprietor: BlackBerry Limited, Waterloo, ON N2K 0A7 (CA)
(72) Inventor: Bhatnagar, Prateek, Waterloo, Ontario N2L 3W8 (CA); Hill, Thomas Casey, Crystal Lake, IL Illinois 60014 (US)
(74) Representative: Greenaway, Martin William

(56) References cited:
- WO-A1-2005/006727
- WO-A1-2008/008093
- US-A1- 2007 153 771
- US-A1- 2008 304 640

## Description

### Technical Field

This application relates to the field of communications, and more particularly, to telephone communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.
United States Patent Publication No. 2008/304640 discloses an RFID telephone system that includes an RFID reader that reads RFID tags contained on wristbands worn by inmates.
Aspects of an invention are defined in the independent claims. Some optional features are defined in the dependent claims.

### Brief Description of the Drawings

FIG. 1 is a schematic block diagram of a communications system in accordance with one example aspect.
FIG. 2 is a schematic block diagram of an example embodiment of the mobile wireless communications device of the system of FIG. 1.
FIG. 3 is a front view of an example embodiment of the mobile wireless communications device of FIG. 2.
FIG. 4 is a schematic block diagram of an example embodiment of the telephone terminal of the system of FIG. 1.
FIG. 5 is a front view of an example embodiment the telephone terminal of FIG. 4.
FIG. 6 is a flow diagram illustrating method aspects associated with the systems and devices of FIGS. 1-5.
FIG. 7 is a schematic block diagram illustrating example mobile wireless communications device components that may be used with the mobile devices of FIGS. 1-3.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communications system is provided herein which may include a telephone terminal, a first near field communication (NFC) device associated with the telephone terminal, a mobile wireless communications device, and a second NFC device associated with the mobile wireless communications device. The telephone terminal may have a first caller identification (ID) associated therewith, and the mobile communications device may have a second caller ID associated therewith different than the first caller ID. The telephone terminal may be configured to place a telephone call over a telephone network, and cooperate with the telephone network to substitute the second caller ID for the first caller ID when placing the telephone call based upon NFC communication between the first NFC device and the second NFC device. As such, it may appear to a call recipient that the call is originating from the mobile wireless communications device, while the call originator is able to use the telephone terminal for added convenience or to avoid undesirable wireless communications charges associated with the mobile wireless communications device.

By way of example, the second caller ID may comprise a telephone number associated with the mobile wireless communications device, a name associated with the mobile wireless communications device, etc. The mobile wireless communications device may further include an input device, and the mobile wireless communications device may be configured to provide the second caller ID to the telephone terminal via NFC communication based upon the input device. Moreover, the mobile wireless communications device may further comprise a display and a controller coupled with the display and the input device, and the controller may be further configured to generate a prompt on the display for authorizing communication of the second caller ID to the telephone terminal.

The telephone terminal may further comprise an input device, and the telephone terminal may be configured to provide the second caller ID to the telephone network based upon the input device. By way of example, the telephone terminal may comprise a public telephone terminal. Also, the telephone terminal may be configured to connect to the telephone network via a land line, for example. The mobile communications device may further include a wireless transceiver, such as a cellular transceiver, for example.

A related mobile wireless communications device and a related telephone terminal, such as those described briefly above, are also provided. A related communications method is for a telephone terminal having a first NFC device associated with the telephone terminal. The method may include placing telephone calls over a telephone network based upon the first caller identification (ID) associated with the telephone terminal. The method may further include communicating with a second NFC device associated with a mobile wireless communications device to receive a second caller ID associated with the mobile wireless communications device different than the first caller ID and, based upon receipt of the second caller ID, cooperating with the telephone network to substitute the second caller ID for the first caller ID when placing a telephone call.

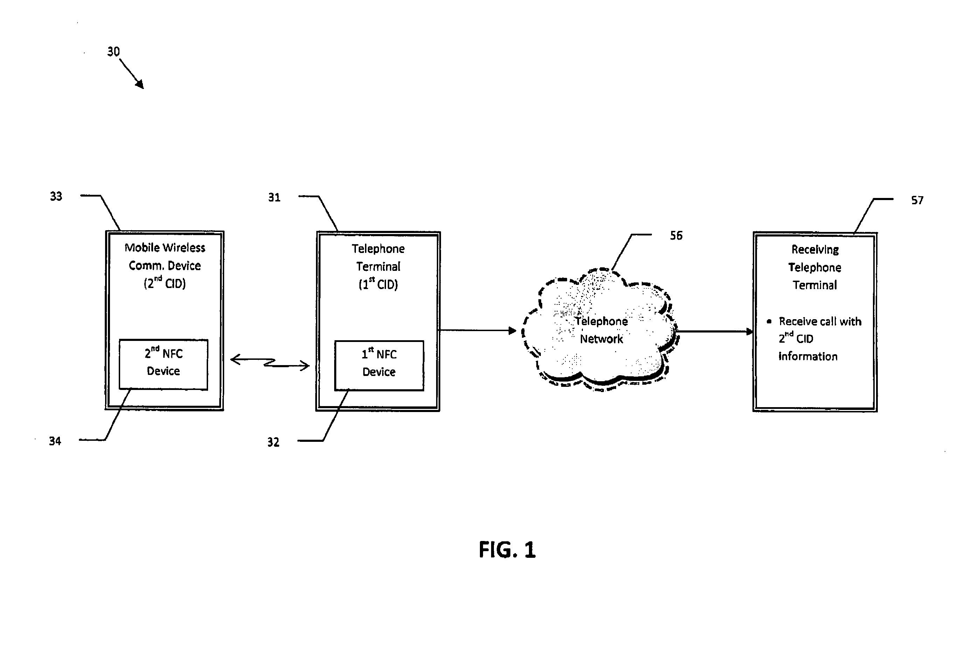

Referring initially to FIG. 1, a communications system **30** illustratively includes a telephone terminal **31,** a first near field communication (NFC) device **32** associated with the telephone terminal **31**, a mobile wireless communications device **33** (also referred to as a "mobile device" herein), and a second NFC device **34** associated with the mobile device **33**. By way of example, the telephone terminal **31** may be a land line telephone, such as a public telephone or a "desktop" phone in an office or conference room, although other suitable types of telephone terminals may also be used. Example mobile devices **33** may include portable or personal media players (e.g., music or MP3 players, video players, etc.), portable gaming devices, portable or mobile telephones, smartphones, tablet computers, digital cameras, etc.

The telephone terminal **31** has a first caller identification (ID or CID) associated therewith, and the mobile device **33** has a second caller ID associated therewith different than the first caller ID. For example, the first caller ID associated with the telephone terminal **31** may be a unique phone number assigned to that telephone terminal, or a name associated with the terminal (e.g., registered user or owner name, name of physical location, etc.), for example. Similarly, the second caller ID associated with the mobile device **33** may also be a unique phone number, name, etc.

The mobile device **33** may advantageously be used to communicate the second caller ID to the telephone terminal **31** via the first NFC device **32** and the second NFC device **34**. By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

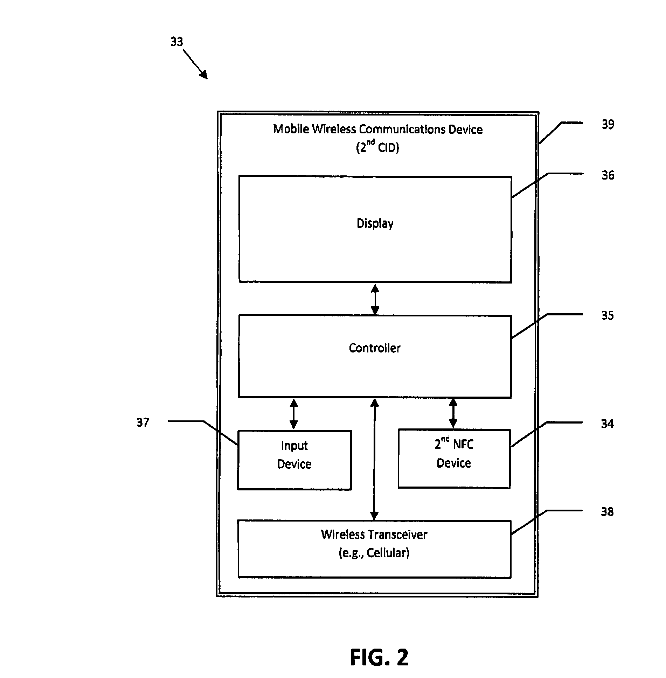

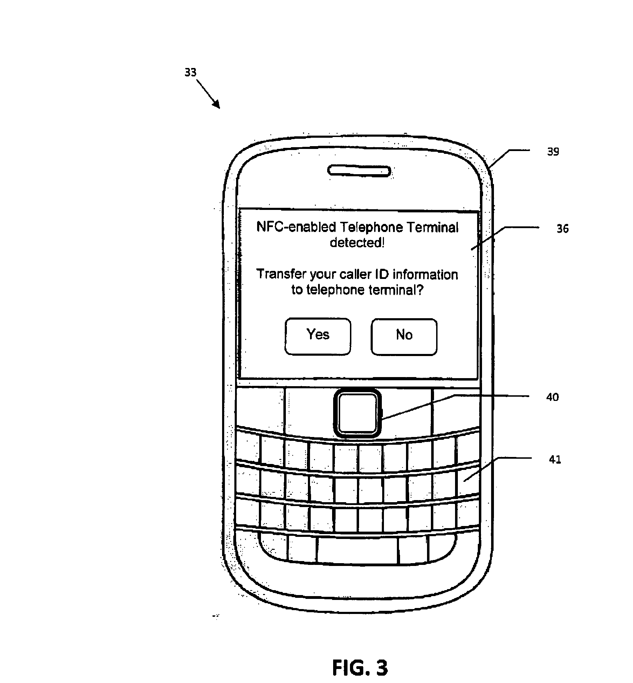

Referring additionally to FIGS. 2 and 3, in one example embodiment the mobile device **33** illustratively includes a controller **35** coupled with a display **36** (e.g., LED, etc.), an input device **37**, a wireless transceiver **38** (e.g., cellular, WiFi, WiMAX, etc.), and the second NFC device **34**. These components may be carried by a portable housing **39**. In the example of FIG. 3, two input devices are included, namely a track pad **40** and a keypad (or keyboard) **41**, although other suitable input devices (e.g., touch screen sensor array, scroll wheel, buttons or convenience keys, track balls, etc.) may also be used. It should be noted that the second NFC device **34** may be carried by the portable housing **39** in some embodiments, but in other embodiments it may be an external NFC device, for example. By way of example, the controller **35** may be implemented using a combination of hardware (e.g., processor, memory, etc.) and computer-executable instructions configured to perform the various operations described herein.

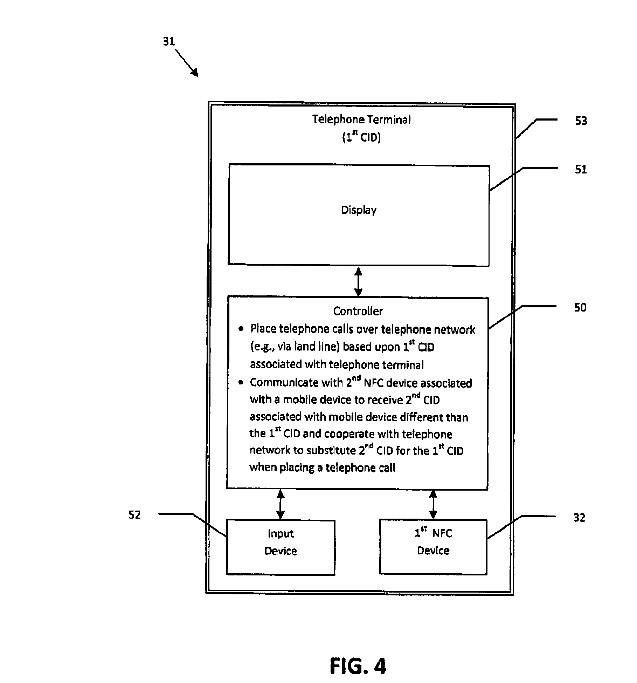

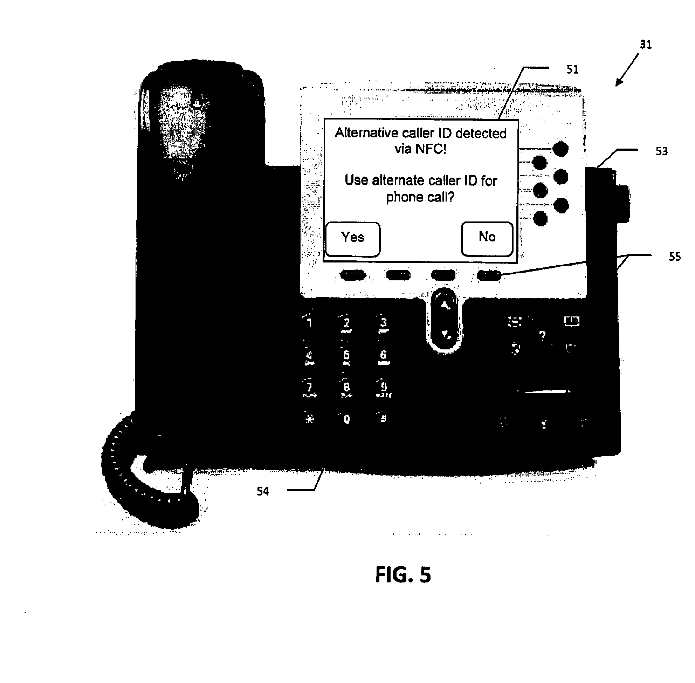

Referring further to FIGS. 4 and 5, the telephone terminal **31** also illustratively includes a controller **50** (which may be implemented similarly to the controller **35**) coupled with a display **51**, an input device **52**, and the first NFC device **32**. These components may also be carried by a housing **53**. In the example of FIG. 5, the housing **53** takes the form of a desktop phone, such as for an office or conference room, although other telephone terminal form factors may also be used, as noted above. Also, a keypad **54** and selection buttons **55** are provided as input devices in this example, although other suitable input devices may also be used in different embodiments. It should be noted that the first NFC device **32** may be carried by the housing **53** in some embodiments, but in other embodiments it may be an external NFC device, for example.

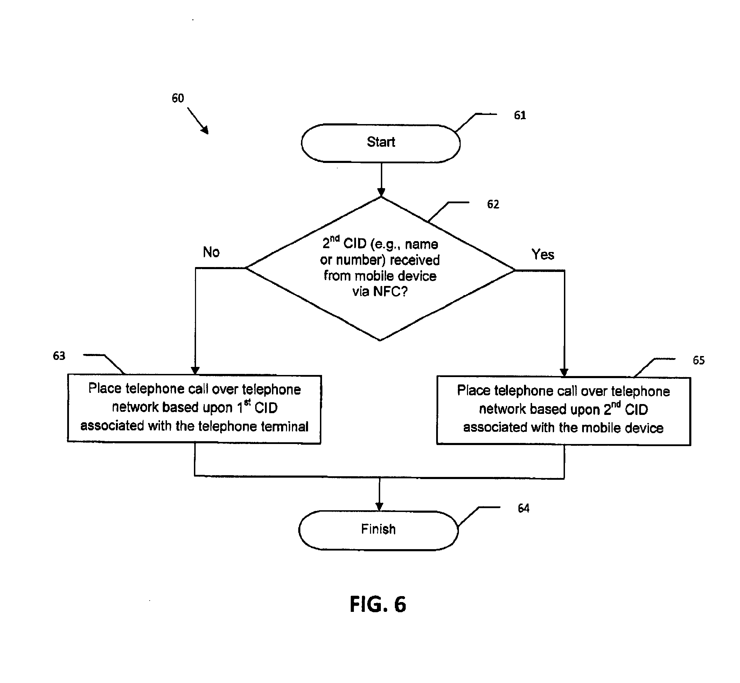

The telephone terminal **31** may be configured to place a telephone call over a telephone network **56** (e.g., public switched telephone network (PSTN)) to a receiving telephone terminal **57**. However, referring to the flow diagram **60** of FIG. 6, beginning at Block **61**, when a call is initiated at the telephone terminal **31** (e.g., by taking the telephone line "off hook" and dialing a phone number of the receiving telephone terminal **57**), the telephone terminal **31** may determine or check whether the second caller ID has been received from the mobile device **33**, at Block **62**. If not, the telephone terminal **31** may proceed to place the telephone call using its own caller ID information (i.e., the first caller ID associated with the telephone terminal), at Block **63**, which illustratively concludes the method of FIG. 6 (Block **64**).

On the other hand, if the initiator of the telephone call swipes or bumps the first NFC device **32** with the second NFC device **34** prior to or during initiation of the telephone call to the receiving telephone terminal **57**, the telephone terminal **31** may advantageously cooperate with the telephone network **56** to substitute the second caller ID for the first caller ID when placing the telephone call based upon the NFC communication between the first NFC device and the second NFC device, at Block **65.** That is, the NFC communication may be used to provide the second caller ID from the mobile device **33** to the telephone terminal **31** so that the telephone terminal may initiate the telephone call as if it were coming from a source associated with the second caller ID (which may be the mobile device itself or another communications device), rather than or instead of the first caller ID. As such, it will appear to the call recipient at the receiving telephone terminal **57** that the call is originating from the source associated with the second caller ID, but it is in actuality originating from the telephone terminal **31**. This may advantageously allow the call originator or initiator to use the telephone terminal **31** for added convenience or to avoid undesirable wireless communications charges associated with the mobile wireless communications device (e.g., roaming charges while in a different country), yet while allowing the call recipient to know who is calling.

The exchange of the second caller ID information from the mobile device **33** to the telephone terminal **31** may occur in different ways. One approach is to use the input device **37** and display **36** to pre-select the second caller ID information (e.g., via on-screen menus, etc.) for transfer via NFC communication prior to swiping or bumping the first NFC device **32**. As such, when the swipe or bump occurs, this information is automatically transferred.

Another approach is that the controller **50** may designate to the controller **35** what type of device the telephone terminal **31** is, and accordingly request that caller ID information be provided to it. In such case, the controller **35** may generate a prompt on the display **36** notifying the user of the mobile device **33** that the NFC-enabled telephone terminal **31** has been detected, and requesting permission to proceed with transferring the second caller ID information to the telephone terminal (e.g., by selecting a "yes" or "no" soft key). Either approach may advantageously help make sure that the second caller ID information is not inadvertently sent to the telephone terminal based upon an accidental bump or swipe, although in some embodiments the second caller ID information may be transferred automatically after a bump or swipe without prompting, if desired.

Similarly, the controller **50** of the telephone terminal 31 may also be configured to provide a prompt for permission to substitute the second caller ID when the second caller ID has been received via NFC. In the example of FIG. 5, the display **51** displays a prompt informing the user that alternative caller ID information (i.e., the second caller ID information) has been detected or received via NFC communication, as well as an inquiry as to whether this alternative caller ID information should be used instead of the first caller ID information, which may be responded to by pressing appropriate buttons **55** corresponding to "yes" or "no" answers on the display. Again, this may help prevent inadvertent substitution of the second caller ID for the first caller ID when this is not intended, but use of the second caller ID may be automatic upon receipt via NFC in some embodiments without prompting, if desired.

Generally speaking, in some telephone networks caller ID information transmitted from the origin of the call (i.e., the telephone terminal **31** in the present example) will include only the calling party's phone number. The calling party's name or location is added by the receiving party's terminating central office (if the receiving party has subscribed to caller ID service). This information may be obtained by the terminating central office from a look-up database, for example. However, some caller ID systems may automatically send the calling name with the call setup and routing information at the time of the call. The telephone terminal **31** may be configured to work with either setup. For example, the telephone terminal **31** may be configured to substitute or replace its own caller ID number (i.e., the first caller ID number) with the second caller ID number when initiating a call with the telephone network **56**. Alternatively, the telephone terminal **31** may append the second caller ID information along with the usual caller ID, name, call setup, routing information, etc., and that telephone network **56** may use the appended second caller ID information when connecting the call receiving telephone terminal **57**.

The system **30** may therefore advantageously allow the call recipient to know who is calling, despite having the call originate from an otherwise unknown telephone terminal. Moreover, using the relatively short-range NFC wireless communications technology to communicate caller ID information to the telephone terminal **31** advantageously helps avoid unintended transmission of caller ID information from nearby devices, such as may be the case with more far-ranging wireless communications technologies such as Bluetooth or WiFi.

It should be noted that, in some embodiments, a fee may be charged for substituting the second caller ID (associated with the mobile device **33**) for the first caller ID (associated with the telephone terminal **31**). In accordance with one example, a hotel may allow a hotel guest to substitute the guest's caller ID for the hotel caller ID when the guest is using a telephone terminal **31** in a hotel room, and charge a fee for doing so. The fee may be paid at the time of the telephone call through the mobile device **33** based upon NFC communications, payment over the air via a cellular or WiFi network, etc. Another example implementation is that the fee or charge may accrue onto a phone bill for the mobile device **33** (e.g., a monthly usage bill from a cellular carrier network, etc.). Still another example implementation is that the charge may be added to the hotel guest's bill for the hotel stay. In any event, the telephone terminal **31** may initiate or implement the fee transaction process responsive to NFC communication from the mobile device **33** or other attempt to place a telephone call using the second (i.e., alternative) caller ID. This approach may be used in other implementations or locations besides hotels as well (e.g., airports, conference centers, shopping centers, etc.).

It should also be noted that the telephone terminal **31** may also have video or other telecommunication capabilities beyond audio voice capabilities. As such, the above-described approach may be used for substituting caller ID information for video conference calls, etc., as well.

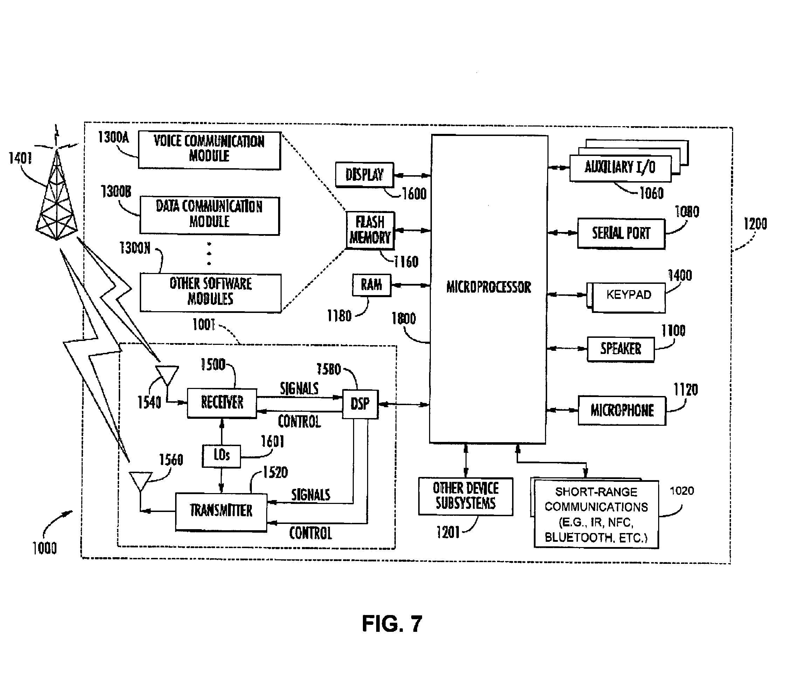

Example components of a mobile wireless communications device **1000** that may be used in accordance with the above-described embodiments are further described below with reference to FIG. 7. The device **1000** illustratively includes a housing **1200,** a keyboard or keypad **1400** and an output device **1600**. The output device shown is a display **1600,** which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600,** as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 7. These include a communications subsystem **1001**; a short-range communications subsystem **1020**; the keypad **1400** and the display **1600,** along with other input/output devices **1060**, **1080**, **1100** and **1120;** as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600,** or alternatively to some other auxiliary I/O device **1060**. A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (33) for use with a telephone terminal (31) arranged to place telephone calls which identify the calling party by transmitting a caller identification, ID, to a call receiving party, the mobile wireless communications device (31) having a second near field communication, NFC, device (32) and a second caller identification, ID, identifying the mobile wireless communications device (31), the mobile wireless communications device (33) comprising:
a controller (35) arranged to couple with said second NFC device and configured to communicate to the telephone terminal (31) the second caller ID, wherein the second caller ID is different to a first caller ID identifying the telephone terminal, for causing the telephone terminal to place a telephone call over a telephone network (56) and cooperate with the telephone network to identify the mobile wireless communications device to the call receiving party as the calling party by replacing the first caller ID with the second caller ID as the caller identification when placing the telephone call based upon the NFC communication between a first NFC device associated with the telephone terminal and said second NFC device.

2. The mobile wireless communications device of Claim 1 wherein the second caller ID comprises at least one of a telephone number associated with the mobile wireless communications device or a name associated with the mobile wireless communications device.

3. The mobile wireless communications device of Claim 1 further comprising an input device (37) coupled with said controller; and wherein said controller is configured to provide the second caller ID to said telephone terminal via NFC communication based upon said input device.

4. The mobile wireless communications device of Claim 3 further comprises a display (36) coupled with said controller; and wherein said controller is further configured to generate a prompt on said display for authorizing communication of the second caller ID to said telephone terminal.

5. A communications system (30) comprising:
the mobile wireless communications device (33) of claim 1;
a telephone terminal (31);
a first near field communication NFC device (32) associated with said telephone terminal;
said telephone terminal having a first caller identification ID identifying the telephone terminal;
said telephone terminal arranged to place telephone calls which identify the calling party by transmitting a caller identification, ID, to a call receiving party, and configured to place the telephone call over the telephone network (56), and cooperate with the telephone network to identify the mobile wireless communications device to the call receiving party as the calling party by replacing the first caller ID with the second caller ID as the caller identification when placing the telephone call based upon NFC communication between said first NFC device and said second NFC device (34).

6. The communications system of Claim 5 wherein the second caller ID comprises a telephone number associated with said mobile wireless communications device.

7. The communications system of Claim 5 wherein the second caller ID comprises a name associated with said mobile wireless communications device.

8. The communications system of Claim 5 wherein said mobile wireless communications device further comprises an input device (37); and wherein said mobile wireless communications device is configured to provide the second caller ID to said telephone terminal via NFC communication based upon said input device.

9. The communications system of Claim 8 wherein said wireless communications device further comprises a display (36) and a controller (35) coupled with said display and said input device; and wherein said controller is further configured to generate a prompt on said display for authorizing communication of the second caller ID to said telephone terminal.

10. The communications system of Claim 5 wherein said telephone terminal further comprises an input device (52); and wherein said telephone terminal is configured to provide the second caller ID to the telephone network based upon said input device.

11. The communications system of Claim 5 wherein said telephone terminal is configured to connect to the telephone network via a land line.

12. A communications method for a telephone terminal (31) having a first near field communication, NFC, device (32) associated with the telephone terminal and a first caller identification, ID, identifying the telephone terminal, and comprising:
placing telephone calls over a telephone network (56) which identify the calling party by transmitting a caller identification ID to a call receiving party; and
communicating with a second NFC device (34) associated with a mobile wireless communications device (33) to receive a second caller ID identifying the mobile wireless communications device, wherein the second caller ID is different to the first caller ID, and based upon receipt of the second caller ID, cooperating with the telephone network to identify the mobile wireless communications device to the call receiving party as the calling party by replacing the first caller ID with the second caller ID as the caller identification when placing a telephone call.

13. The method of Claim 12 wherein the second caller ID comprises at least one of a telephone number associated with the mobile wireless communications device or a name associated with the mobile wireless communications device.

14. The method of Claim 12 wherein the telephone terminal further comprises an input device (52); and further comprising providing the second caller ID to the telephone network based upon the input device.

15. The method of Claim 12 wherein the telephone terminal is configured to connect to the telephone network via a land line.

## Patentansprüche

1. Mobile Drahtloskommunikationsvorrichtung (33) zur Verwendung mit einem Telefonanschlussgerät (31), das dazu ausgelegt ist, Telefonanrufe zu tätigen, welche den anrufenden Teilnehmer durch Senden einer Anruferidentifikation gegenüber einem den Anruf erhaltenden Teilnehmer identifiziert, wobei die mobile Drahtloskommunikationsvorrichtung (31) eine zweite Nahfeldkommunikations-, "Near Field Communication"-, NFC-Vorrichtung (32) und eine zweite Anruferidentifikation hat, welche die mobile Drahtloskommunikationsvorrichtung (31) identifiziert, wobei die mobile Drahtloskommunikationsvorrichtung (33) Folgendes aufweist:
eine Steuereinheit (35), die dazu ausgelegt ist, sich mit der zweiten NFC-Vorrichtung zu koppeln, und dazu konfiguriert ist, die zweite Anruferidentifikation an das Telefonanschlussgerät (31) zu kommunizieren, wobei die zweite Anruferidentifikation von einer ersten Anruferidentifikation verschieden ist, die das Telefonanschlussgerät identifiziert, zum Veranlassen des Telefonanschlussgeräts, einen Telefonanruf über ein Telefonnetz (56) zu tätigen und mit dem Telefonnetz zusammenzuarbeiten, um die mobile Drahtloskommunikationsvorrichtung gegenüber dem den Anruf erhaltenden Teilnehmer als den anrufenden Teilnehmer zu identifizieren, indem die erste Anruferidentifikation auf Grundlage der NFC-Kommunikation zwischen einer ersten NFC-Vorrichtung, die mit dem Telefonanschlussgerät verknüpft ist, und der zweiten NFC-Vorrichtung mit der zweiten Anruferidentifikation als die Anruferidentifikation ersetzt wird, wenn der Anruf getätigt wird.

2. Mobile Drahtloskommunikationsvorrichtung nach Anspruch 1, wobei die zweite Anruferidentifikation mindestens eines aus einer Telefonnummer, die mit der mobilen Drahtloskommunikationsvorrichtung verknüpft ist, oder einen Namen aufweist, der mit der mobilen Drahtloskommunikationsvorrichtung verknüpft ist.

3. Mobile Drahtloskommunikationsvorrichtung nach Anspruch 1, ferner mit einer Eingabevorrichtung (37), die mit der Steuereinheit gekoppelt ist, und wobei die Steuereinheit dazu konfiguriert ist, die zweite Anruferidentifikation an das Telefonanschlussgerät über eine NFC-Kommunikation auf Grundlage der Eingabevorrichtung bereitzustellen.

4. Mobile Drahtloskommunikationsvorrichtung nach Anspruch 3, ferner mit einer Anzeige (36), die mit der Steuereinheit gekoppelt ist, und wobei die Steuereinheit ferner dazu konfiguriert ist, eine Aufforderung auf der Anzeige zum Autorisieren einer Kommunikation der zweiten Anruferidentifikation an das Telefonanschlussgerät zu erzeugen.

5. Kommunikationssystem (30) mit:
der mobilen Drahtloskommunikationsvorrichtung (33) nach Anspruch 1,
einem Telefonanschlussgerät (31),
einer ersten Nachfeldkommunikations-NFC-Vorrichtung (32), die mit dem Telefonanschlussgerät verknüpft ist,
wobei das Telefonanschlussgerät eine erste Anruferidentifikation aufweist, die das Telefonanschlussgerät identifiziert,
wobei das Telefonanschlussgerät dazu ausgelegt ist, Telefonanrufe zu tätigen, die den anrufenden Teilnehmer durch Senden einer Anruferidentifikation gegenüber einem den Anruf erhaltenden Teilnehmer identifizieren, und dazu konfiguriert ist, den Telefonanruf über das Telefonnetz (56) zu tätigen, und mit dem Telefonnetz zusammenzuarbeiten, um die mobile Drahtloskommunikationsvorrichtung gegenüber dem den Anruf erhaltenden Teilnehmer als der anrufende Teilnehmer zu identifizieren, indem die erste Anruferidentifikation auf Grundlage einer NFC-Kommunikation zwischen der ersten NFC-Vorrichtung und der zweiten NFC-Vorrichtung (34) mit der zweiten Anruferidentifikation als die Anruferidentifikation ersetzt wird, wenn der Telefonanruf getätigt wird.

6. Kommunikationssystem nach Anspruch 5, wobei die zweite Anruferidentifikation eine Telefonnummer aufweist, die mit der mobilen Drahtloskommunikationsvorrichtung verknüpft ist.

7. Kommunikationssystem nach Anspruch 5, wobei die zweite Anruferidentifikation eine Namen aufweist, der mit der mobilen Drahtloskommunikationsvorrichtung verknüpft ist.

8. Kommunikationssystem nach Anspruch 5, wobei die mobile Drahtloskommunikationsvorrichtung ferner eine Eingabevorrichtung (37) aufweist, und wobei die mobile Drahtloskommunikationsvorrichtung dazu konfiguriert ist, die zweite Anruferidentifikation an das Telefonanschlussgerät über eine NFC-Kommunikation auf Grundlage der Eingabevorrichtung bereitzustellen.

9. Kommunikationssystem nach Anspruch 8, wobei die Drahtloskommunikationsvorrichtung ferner eine Anzeige (36) und eine Steuereinheit (35) aufweist, die mit der Anzeige und der Eingabevorrichtung gekoppelt ist, und wobei die Steuereinheit ferner dazu konfiguriert ist, eine Aufforderung auf der Anzeige zum Autorisieren einer Kommunikation der zweiten Anruferidentifikation an das Telefonanschlussgerät zu erzeugen.

10. Kommunikationssystem nach Anspruch 5, wobei das Telefonanschlussgerät ferner eine Eingabevorrichtung (52) aufweist, und wobei das Telefonanschlussgerät dazu konfiguriert ist, die zweite Anruferidentifikation an das Telefonnetz auf Grundlage der Eingabevorrichtung bereitzustellen.

11. Kommunikationssystem nach Anspruch 5, wobei das Telefonanschlussgerät dazu konfiguriert ist, sich über eine Festnetzleitung mit dem Telefonnetz zu verbinden.

12. Kommunikationsverfahren für ein Telefonanschlussgerät (31), das eine erste Nahfeldkommunikations-, "Near Field Communication"-, NFC-Vorrichtung (32), die mit dem Telefonanschlussgerät verknüpft ist, und eine erste Anruferidentifikation aufweist, die das Telefonanschlussgerät identifiziert, mit:
Tätigen von Telefonanrufen über ein Telefonnetz (56), die den anrufenden Teilnehmer durch Senden einer Anruferidentifikation gegenüber einem den Anruf erhaltenden Teilnehmer identifizieren, und
Kommunizieren mit einer zweiten NFC-Vorrichtung (34), die mit einer mobilen Drahtloskommunikationsvorrichtung (33) verknüpft ist, um eine zweite Anruferidentifikation zu erhalten, welche die mobile Drahtloskommunikationsvorrichtung identifiziert, wobei die zweite Anruferidentifikation von der ersten Anruferidentifikation verschieden ist, und auf Grundlage eines Erhaltens der zweiten Anruferidentifikation, Zusammenarbeiten mit dem Telefonnetz, um die mobile Drahtloskommunikationsvorrichtung gegenüber dem den Anruf erhaltenden Teilnehmer als den anrufenden Teilnehmer zu identifizieren, indem die erste Anruferidentifikation mit der zweiten Anruferidentifikation als die Anruferidentifikation ersetzt wird, wenn der Anruf getätigt wird.

13. Verfahren nach Anspruch 12, wobei die zweite Anruferidentifikation mindestens eines aus einer Telefonnummer, die mit der mobilen Drahtloskommunikationsvorrichtung verknüpft ist, oder einen Namen aufweist, der mit der mobilen Drahtloskommunikationsvorrichtung verknüpft ist.

14. Verfahren nach Anspruch 12, wobei das Telefonanschlussgerät ferner eine Eingabevorrichtung (52) aufweist, und ferner mit Bereitstellen der zweiten Anruferidentifikation an das Telefonnetz auf Grundlage der Eingabevorrichtung.

15. Verfahren nach Anspruch 12, wobei das Telefonanschlussgerät dazu konfiguriert ist, sich über eine Festnetzleitung mit dem Telefonnetz zu verbinden.

## Revendications

1. Dispositif de communication mobile sans fil (33) destiné à être utilisé avec un terminal téléphonique (31) conçu pour passer des appels téléphoniques qui identifient la partie appelante en transmettant à la partie destinataire de l'appel une identification, ID, de l'appelant, le dispositif de communication mobile sans fil (31) possédant un second dispositif de communication en champ proche (32), NFC pour « *Near Field Communication* », et une seconde identification, ID, de l'appelant qui identifie le dispositif de communication mobile sans fil (31), le dispositif de communication mobile sans fil (33) comprenant :
un contrôleur (35) conçu pour s'accoupler avec ledit second dispositif NFC et configuré pour communiquer la seconde identification de l'appelant au terminal téléphonique (31), la seconde identification de l'appelant étant différente de la première identification de l'appelant qui identifie le terminal téléphonique, afin de commander au terminal téléphonique de passer un appel téléphonique sur un réseau téléphonique (56) et de coopérer avec le réseau téléphonique pour identifier le dispositif de communication mobile sans fil auprès de la partie destinataire de l'appel en tant que la partie appelante en remplaçant la première identification de l'appelant par la seconde identification de l'appelant comme identification de l'appelant lorsqu'il passe l'appel téléphonique, en fonction de la communication NFC entre un premier dispositif NFC associé au terminal téléphonique et ledit second dispositif NFC.

2. Dispositif de communication mobile sans fil selon la revendication 1, dans lequel la seconde identification de l'appelant comprend au moins soit un numéro de téléphone associé au dispositif de communication mobile sans fil, soit un nom associé au dispositif de communication mobile sans fil.

3. Dispositif de communication mobile sans fil selon la revendication 1, comprenant en outre un dispositif de saisie (37) couplé audit contrôleur, et dans lequel ledit contrôleur est configuré pour fournir la seconde identification de l'appelant audit terminal téléphonique par une communication NFC, en fonction dudit dispositif de saisie.

4. Dispositif de communication mobile sans fil selon la revendication 3, comprenant en outre un écran d'affichage (36) couplé audit contrôleur, et dans lequel ledit contrôleur est en outre configuré pour produire un message d'invite sur ledit écran d'affichage afin d'autoriser la communication de la seconde identification de l'appelant audit terminal téléphonique.

5. Système de communication (30) comprenant :
le dispositif de communication mobile sans fil (33) selon la revendication 1 ;
un terminal téléphonique (31) ;
un premier dispositif de communication en champ proche, NFC pour « *Near Field Communication* », (32) associé audit terminal téléphonique ;
ledit terminal téléphonique ayant une première identification de l'appelant qui identifie le terminal téléphonique ;
ledit terminal téléphonique étant conçu pour passer des appels téléphoniques qui identifient la partie appelante en envoyant à la partie destinataire de l'appel une identification, ID, de l'appelant et étant configuré pour passer l'appel téléphonique sur le réseau téléphonique (56) et pour coopérer avec le réseau téléphonique pour identifier le dispositif de communication mobile sans fil en tant que la partie appelante vis-à-vis de la partie destinataire de l'appel en remplaçant la première identification de l'appelant par la seconde identification de l'appelant comme identification de l'appelant lorsqu'il passe l'appel téléphonique, en fonction d'une communication NFC entre ledit premier dispositif NFC et ledit second dispositif NFC (34).

6. Système de communication selon la revendication 5, dans lequel la seconde identification de l'appelant comprend un numéro de téléphone associé audit dispositif de communication mobile sans fil.

7. Système de communication selon la revendication 5, dans lequel la seconde identification de l'appelant comprend un nom associé audit dispositif de communication mobile sans fil.

8. Système de communication selon la revendication 5, dans lequel ledit dispositif de communication mobile sans fil comprend en outre un dispositif de saisie (37), et dans lequel ledit dispositif de communication mobile sans fil est configuré pour fournir la seconde identification de l'appelant audit terminal téléphonique par une communication NFC, en fonction dudit dispositif de saisie.

9. Système de communication selon la revendication 8, dans lequel ledit dispositif de communication mobile sans fil comprend en outre un écran d'affichage (36) et un contrôleur (35) couplé audit écran d'affichage et audit dispositif de saisie, et dans lequel ledit contrôleur est en outre configuré pour produire un message d'invite sur ledit écran d'affichage afin d'autoriser la communication de la seconde identification de l'appelant audit terminal téléphonique.

10. Système de communication selon la revendication 5, dans lequel ledit terminal téléphonique comprend en outre un dispositif de saisie (52), et dans lequel ledit terminal téléphonique est configuré pour fournir la seconde identification de l'appelant au réseau téléphonique en fonction dudit dispositif de saisie.

11. Système de communication selon la revendication 5, dans lequel ledit terminal téléphonique est configuré pour se connecter au réseau téléphonique par une ligne terrestre.

12. Procédé de communication destiné à un terminal téléphonique (31) possédant un premier dispositif de communication en champ proche, NFC pour « *Near Field Communication* », (32) associé au terminal téléphonique et une première identification, ID, de l'appelant qui identifie le terminal téléphonique, et comprenant les étapes consistant à :
passer des appels téléphoniques sur un réseau téléphonique (56) qui identifie la partie appelante en envoyant à une partie destinataire de l'appel une identification de l'appelant ; et
communiquer avec un second dispositif NFC (34) associé à un dispositif de communication mobile sans fil (33) afin de recevoir une seconde identification de l'appelant qui identifie le dispositif de communication mobile sans fil, la seconde identification de l'appelant étant différente de la première identification de l'appelant et, en fonction de la réception de la seconde identification de l'appelant, coopérer avec le réseau téléphonique afin d'identifier le dispositif de communication mobile sans fil en tant que la partie appelante vis-à-vis de la partie destinataire de l'appel en remplaçant la première identification de l'appelant par la seconde identification de l'appelant comme identification de l'appelant lorsqu'un appel téléphonique est passé.

13. Procédé selon la revendication 12, dans lequel la seconde identification de l'appelant comprend au moins soit un numéro de téléphone associé au dispositif de communication mobile sans fil, soit un nom associé au dispositif de communication mobile sans fil.

14. Procédé selon la revendication 12, dans lequel le terminal téléphonique comprend en outre un dispositif de saisie (52), et comprenant en outre l'étape consistant à fournir la seconde identification de l'appelant au réseau téléphonique en fonction du dispositif de saisie.

15. Procédé selon la revendication 12, dans lequel le terminal téléphonique est configuré pour se connecter au réseau téléphonique par une ligne terrestre.
